# EUROPÄISCHE PATENTSCHRIFT

(11) **EP 3 394 565 B1**
(45) Veröffentlichungstag und Bekanntmachung des Hinweises auf die Patenterteilung: **07.02.2024**
(21) Anmeldenummer: 16810344.8
(22) Anmeldetag: 12.12.2016
(51) Int. Cl.: G01C 21/16

(54) **VERFAHREN ZUR MESSUNG DER VARIANZ IN EINEM MESSSIGNAL, VERFAHREN ZUR DATENFUSION, COMPUTERPROGRAMM, MASCHINENLESBARES SPEICHERMEDIUM UND VORRICHTUNG**
METHOD FOR MEASURING THE VARIANCE IN A MEASURING SIGNAL, METHOD FOR DATA FUSION, COMPUTER PROGRAM, MACHINE-READABLE MEMORY MEDIUM AND DEVICE
MÉTHODE POUR MESURER LA VARIANCE DANS UN SIGNAL DE MESURE, MÉTHODE POUR FUSION DE DONNÉES, PROGRAMME D'ORDINATEUR, SUPPORT DE DONNÉES LISIBLE PAR MACHINE ET DISPOSITIF

(30) Priorität: 21.12.2015 DE 102015226365
(43) Veröffentlichungstag der Anmeldung: 31.10.2018
(73) Patentinhaber: Robert Bosch GmbH, 70442 Stuttgart (DE)
(72) Erfinder: TROOST, Aaron, 74199 Untergruppenbach (DE)
(86) Internationale Anmeldenummer: PCT/EP2016/080606
(87) Internationale Veröffentlichungsnummer: WO 2017/108473

(56) Entgegenhaltungen:
- JP-A- 2015 114 221
- US-A1- 2001 029 421
- US-A1- 2008 317 371
- GUI PENGFEI ET AL: "MEMS based IMU for tilting measurement: Comparison of complementary and kalman filter based data fusion", 2015 IEEE 10TH CONFERENCE ON INDUSTRIAL ELECTRONICS AND APPLICATIONS (ICIEA), IEEE, 15 June 2015 (2015-06-15), pages 2004-2009, XP032816201, DOI: 10.1109/ICIEA.2015.7334442 [retrieved on 2015-11-20]

## Beschreibung

Die vorliegende Erfindung betrifft ein Verfahren zur Messung einer Varianz in einem Messsignal und ein Verfahren zur Datenfusion. Ferner betrifft die vorliegende Erfindung ein Computerprogramm, ein maschinenlesbares Speichermedium und eine entsprechende Vorrichtung, insbesondere zum Einsatz bei der satellitengestützten Navigation.

### Stand der Technik

Aus der US 7,209,938 B2 ist eine Filtertechnik mittels eines Kalman-Filters bekannt, die einen adaptiven Schätzer für die Messwertvarianz einsetzt. Die Technik des Kalman-Filters umfasst dabei einen Mechanismus zum Signalfiltern. Der Mechanismus zum Signalfiltern umfasst darüber hinaus einen Kalman-Filter und einen Varianzschätzer.

Die JP 2015 114221 A offenbart eine Signalverarbeitungseinrichtung für einen Sensor mit einem Kalman-Filterprozess basierend auf dem Messrauschen.

Bei der Datenfusion, insbesondere bei der Navigation mittels Inertialsensoren und GNSS, werden häufig Kalman-Filter eingesetzt. Diese statistischen Filter benötigen neben einem Modell und Messgrößen zusätzlich Informationen über die Güte der Messdaten in Form der Varianz der Messdaten.

Für Messsignale, deren Varianz nicht bekannt oder veränderlich ist, können adaptive Kalman-Filter verwendet werden, die die Varianzen anpassen. Dazu werden meist auch die Zustände des Kalman-Filters verwendet und durch komplexe Matrixoperationen die Varianzen geschätzt.

### Offenbarung der Erfindung

Vor diesem Hintergrund wird mit der vorliegenden Erfindung ein Verfahren zur Datenfusion gemäß dem unabhängigen Anspruch 1 vorgeschlagen.

Das Verfahren eignet sich besonders für die Messsignale eines Kalman-Filters zur Datenfusion während der Laufzeit, um zu einer besseren und adaptiven Filterperformance des Gesamtsystems zu gelangen.

Sie ermöglicht eine ressourcenschonende Implementierung, die unabhängig vom Modell ist, das dem Kalman Filter hinlegt ist.

Somit hat die Erfindung mehr den Charakter einer Messung als den Charakter einer Schätzung.

Kern der Erfindung ist die Bestimmung des Rauschens, insbesondere der Varianz, in den Messsignalen des Kalman-Filters ausschließlich anhand der Messsignale selbst. Somit ist die Bestimmung des Rauschens eher als Messung des Rauschens zu erachten. Dies ist vorteilhaft gegenüber den herkömmlichen Systemen bei denen das Rauschen geschätzt wird und vom hinterlegten Modell abhängig ist.

Herauszuheben ist an der vorliegenden Erfindung, dass die Messung der Varianz außerhalb des Kalman-Filters erfolgt und somit nicht von der inhärenten Trägheit, die dem Kalman-Filter innewohnt abhängt. Dadurch ist ein schnelles Anpassen auf Veränderungen im Messsignal möglich. Vorteilhaft ist ebenso, dass konstante Eingangssignale schneller zu einem konstanten Ausgangssignal führen. Vorgeschlagen wird die Varianz eines Messsignales zu bestimmen, indem der Gleichanteil, mithin das reale Signal, mittels eines Hochpassfilters, insbesondere eines digitalen Hochpassfilters, unterdrückt wird.

Gerade beim Einsatz des Verfahrens bei Fahrzeugen, bspw. bei der Positionsbestimmung basierend auf satellitengestützten Navigationseinrichtungen, spielt die vorgestellte Erfindung ihre Vorteile aus.

Die Erfindung ist außerdem mit geringerem Hardwareressourcenaufwand verbunden.

Dazu umfasst das Verfahren die Schritte:
- Filtern des Messsignals mittels eines Hochpassfilters, um ein gefiltertes Messsignal zu erhalten;
- Bestimmen der Varianz anhand des gefilterten Messsignals.

Bei dem Messsignal kann es sich vorliegend um jegliches Messsignal handeln.

Die Erfindung entstammt allerdings der Erkenntnis, dass besonders gute Ergebnisse bei der Datenfusion von Signalen einer satellitengestützten Navigationseinrichtung (GNSS-Signale) mit Signalen einer Inertialsensorik, bspw. einer Beschleunigungssensorik, erzielt werden können.

Gemäß der Erfindung ist der Hochpassfilter ein linearphasiger Filter.

Durch den Einsatz eines linearphasigen Filters weisen alle Rauschanteile die gleiche Gruppenlaufzeit auf.

Besonders einfach kann dies durch die Verwendung eines Finite Impulse Response (FIR) Filters bewirkt werden.

Beim Einsatz eines FIR-Filters hat sich gezeigt, dass die Ergebnisse der Varianz-Messung deutlich verbessert sind, wenn die Koeffizienten des Hochpassfilters von der Abtastrate abhängig sind, mit der das Messsignal erfasst wird.

Entscheidend bei dieser Methode ist eine möglichst geringe Gruppenlaufzeit im Filterpfad, da das Rauschen der Messsignale je nach Fahrzustand unterschiedlich sein kann.

Eine geringe Gruppenlauzeit verhindert, dass eine Änderung im Rauschen auch schnell in eine neue Varianz überführt werden kann und somit bei schnellem Wechsel zwischen Fahrzuständen die Varianzermittlung trotzdem korrekt ist.

In der spezifischen Anwendung, d.h. der Datenfusion von GNSS-Signalen mit Signalen einer Inertialsensorik, bspw. einer Beschleunigungssensorik, hat sich eine Gruppenlaufzeit, die zwischen 50 ms und 100 ms liegt, als vorteilhaft erwiesen. Empfohlen wird eine Gruppenlaufzeit von 80 ms.

Gemäß einer effizienten Ausführungsform des vorliegenden Verfahrens erfolgt nach dem Schritt des Filterns ein zweiter Schritt des Filterns, wobei in dem zweiten Schritt des Filterns die aus dem zuvor gefilterten Messsignal bestimmte Varianz mittels eines Tiefpassfilters gefiltert wird.

Nach einer einfachen Ausführungsform kann mit einem Tiefpassfilter, insbesondere mit eine PT1 Tiefpassfilter, der Mittelwert der Summenquadrate laufend gebildet werden. Diese Vereinfachung basiert auf der Erkenntnis, dass der Mittelwert der Summenquadrate direkt der Varianz entspricht, wenn der Mittelwert durch den vorherigen Hochpassfilter als 0 angenommen wird.

Die Grenzfrequenzen der Filter richten sich dabei nach der Frequenz, bei der noch für die Messaufgabe relevante Informationen im Signal enthalten sind.

Daher richten sich gemäß einer Ausführungsform des Verfahrens die Grenzfrequenzen des Hochpassfilters bzw. des Tiefpassfilters nach der Frequenz, bei der noch für die Messaufgabe relevante Informationen im Messsignal enthalten sind.

Im Bereich der Fahrdynamik von Straßenfahrzeugen sind das je nach Spuranzahl des Fahrzeuges etwa 3 Hz bis 20Hz, insbesondere 5 Hz bis 20 Hz. Nach einer vorteilhaften Ausführungsform des Verfahrens wird im Schritt des Bestimmens, die Varianz mittels einer laufenden Berechnung bzw. mittels eines laufenden Mittelwerts bzw. mittels eines laufenden Mittelwerts der Summenquadrate berechnet.

Dies stellt eine einfache Realisierung zur Berechnung bzw. Messung der Varianz aus dem hochpassgefilterten Eingangssignal dar.

Um bei der laufenden Berechnung mittels laufendem Mittelwert und laufendem Mittelwert der Summenquadrate nicht die gesamte Historie des Messsignals zur erhalten, sondern, um den letzten Zeitraum zu betrachten, erfolgt gemäß einer erweiterten Variante im Schritt des Bestimmens ein dritter Schritt des Filterns und in diesem Schritt wird der laufende Mittelwert gefiltert.

Dadurch lässt die auf einfache Art und Weise die Varianzberechnung bzw. Messung auf den gesuchten bzw. relevanten Messzeitraum einschränken.

Ein weiterer Aspekt der vorliegenden Erfindung ist ein Verfahren zur Datenfusion mittels eines Kalman-Filters, wobei ein erstes Eingangssignal ein Messsignal ist und ein zweites Eingangssignal eine Varianz des Messsignals ist, wobei die Varianz mittels einer Ausführungsform des Verfahrens gemäß der vorliegenden Erfindung gemessen wird.

Von besonderem Vorteil ist dabei eine Ausführungsform des Verfahrens zur Datenfusion, wonach die Varianz außerhalb des Kalman-Filters gemessen wird.

Ein weiterer Aspekt der vorliegenden Erfindung ist ein Computerprogramm nach Anspruch 8, welches eingerichtet ist, alle Schritte des Verfahrens zur Messung einer Varianz bzw. des Verfahrens zur Datenfusion durchzuführen sowie ein maschinenlesbares Speichermedium nach Anspruch 9, auf dem eine Ausführungsform dieses Computerprogramms gespeichert ist.

Darüber hinaus ist ein Aspekt der vorliegenden Erfindung, eine Vorrichtung nach Anspruch 10, die dazu eingerichtet ist, alle Schritte des Verfahrens zur Messung einer Varianz bzw. des Verfahrens zur Datenfusion durchzuführen.

Besonders ratsam ist es für die Umsetzung einer solchen Vorrichtung als ein eingebettetes System, wie bspw. für Fahrzeugsensoren und -steuergeräte, Divisoren in Zweierpotenzen zu gestalten, um die Divisionsoperation durch einen arithmetischen Shift zu ersetzten.

Nachfolgend werden Ausführungsformen der vorliegenden Erfindung anhand von Figuren dargestellt und erläutert. Es zeigen:
- Fig. 1: ein Blockschaltbild einer Ausführungsform der vorliegenden Erfindung;
- Fig. 2: einen Graph mit Eingangssignalen 1 bis 4;
- Fig. 3a: einen Graph mit Varianzbestimmungen ausgehend von Eingangssignal 1 mit unterschiedlichen Methoden;
- Fig. 3b: einen Graph mit Varianzbestimmungen ausgehend von Eingangssignal 2 mit unterschiedlichen Methoden;
- Fig. 3c: einen Graph mit Varianzbestimmungen ausgehend von Eingangssignal 3 mit unterschiedlichen Methoden;
- Fig. 3d: einen Graph mit Varianzbestimmungen ausgehend von Eingangssignal 4 mit unterschiedlichen Methoden;
- Fig. 4: ein Blockschaltbild;
- Fig. 5: ein Ablaufdiagramm einer Ausführungsform des Verfahrens zur Messung der Varianz in einem Messsignal gemäß der vorliegenden Erfindung;
- Fig. 6: ein Ablaufdiagramm einer Ausführungsform des Verfahrens zur Datenfusion gemäß der vorliegenden Erfindung.

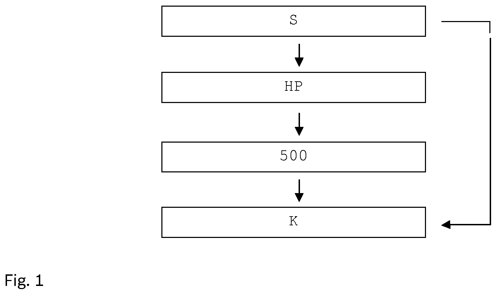

Figur 1 zeigt ein Blockschaltbild einer Ausführungsform der vorliegenden Erfindung. Dem Blockschaltbild ist deutlich der Kern der vorliegenden Erfindung zu entnehmen. Sensoren S liefern Sensorsignale bzw. Messsignale an eine weiterverarbeitende Einheit. Zur Datenfusion von Sensorsignalen kann dazu vorteilhafter Weise ein Kalman-Filter K eingesetzt werden, der auf die Messsignale angewendet wird. Dazu werden die Messsignale einerseits dem Kalman-Filter K zugeführt, andererseits werden die Messsignale einem Filter, hier einem Hochpassfilter HP zugeführt, um den Gleichanteil, mithin das reale Signal, zu unterdrücken. Dieses so gefilterte Messsignal wird dann der Varianzbestimmung bzw. -messung gemäß dem vorgestellten Verfahren 500 zugeführt. Die gemessene Varianz wird dann wiederum dem Kalman-Filter K zugeführt und als weitere Eingangsgröße zur Datenfusion ausgewertet.

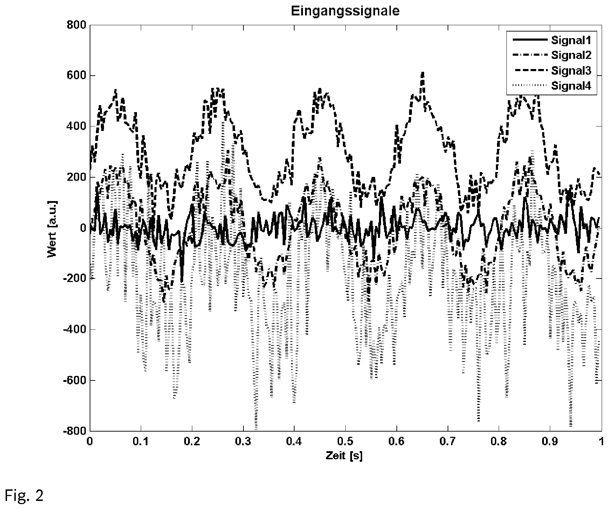

Figur 2 zeigt einen Graph mit vier Messsignalen (Signal 1 bis 4). Wie aus dem Graph ersichtlich weisen die Messsignale eine unterschiedlich starke Varianz auf. In den folgenden Figuren werden in weiteren Graphen die Ergebnisse verschiedener Methoden zur Varianzbestimmung im Vergleich zu einer Ausführungsform des Verfahrens der vorgestellten Erfindung aufgezeigt.

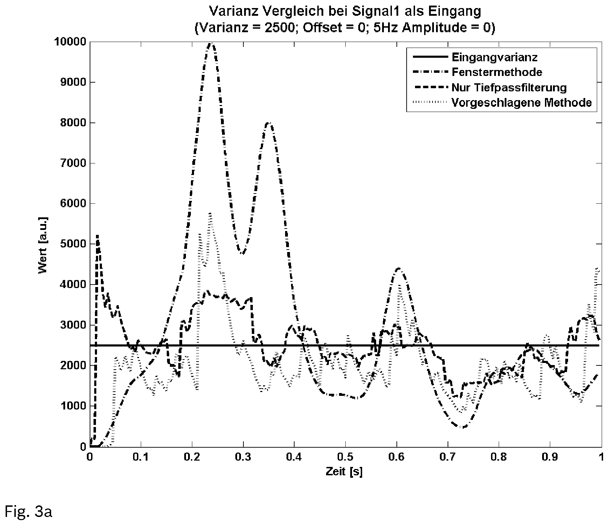

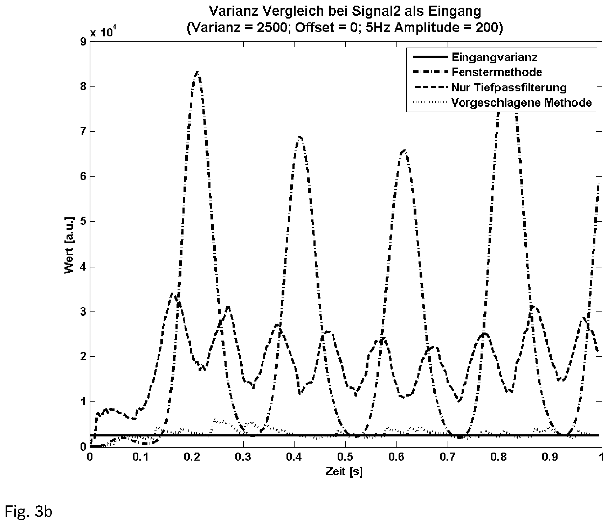

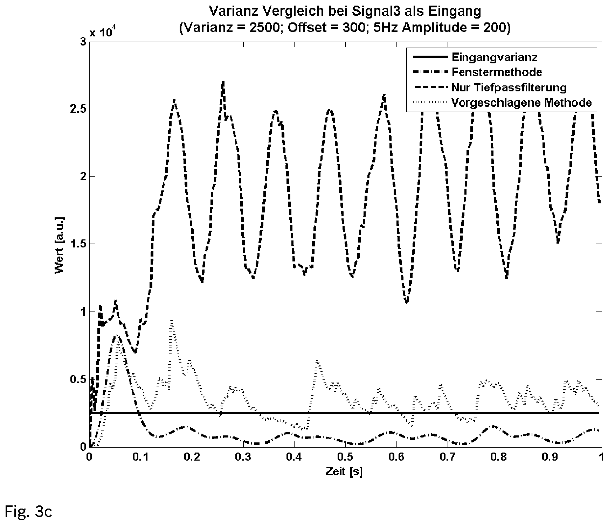

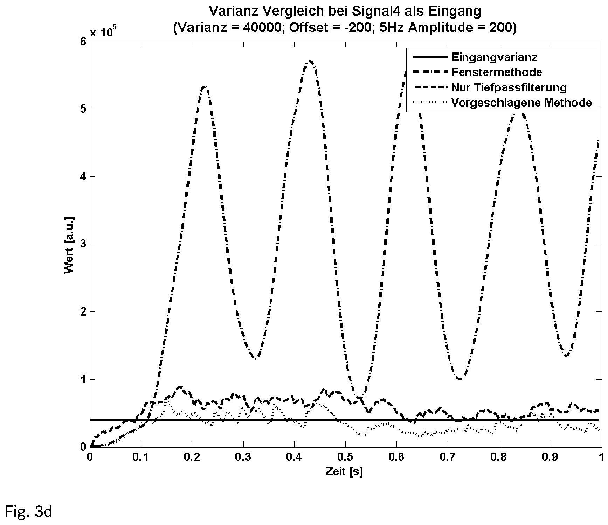

Figuren 3a bis 3d zeigen Graphen mit Ergebnissen der Varianzbestimmung gemäß der Fenstermethode und einer reinen Tiefpassfilterung im Vergleich zu einer Ausführungsform des Verfahrens 500 der vorgestellten Erfindung.

Die Ergebnisse machen die Leistungsfähigkeit der vorgestellten Erfindung deutlich sichtbar, da die Ergebnisse der Ausführungsform des Verfahrens der vorgestellten Erfindung wesentlich enger um die als Eingangsvarianz bezeichnete Referenzvarianz pendeln.

Somit zeigt sich, dass die vorliegende Erfindung auf unterschiedlichste Eingangssignale anwendbar ist und gute Ergebnisse liefert.

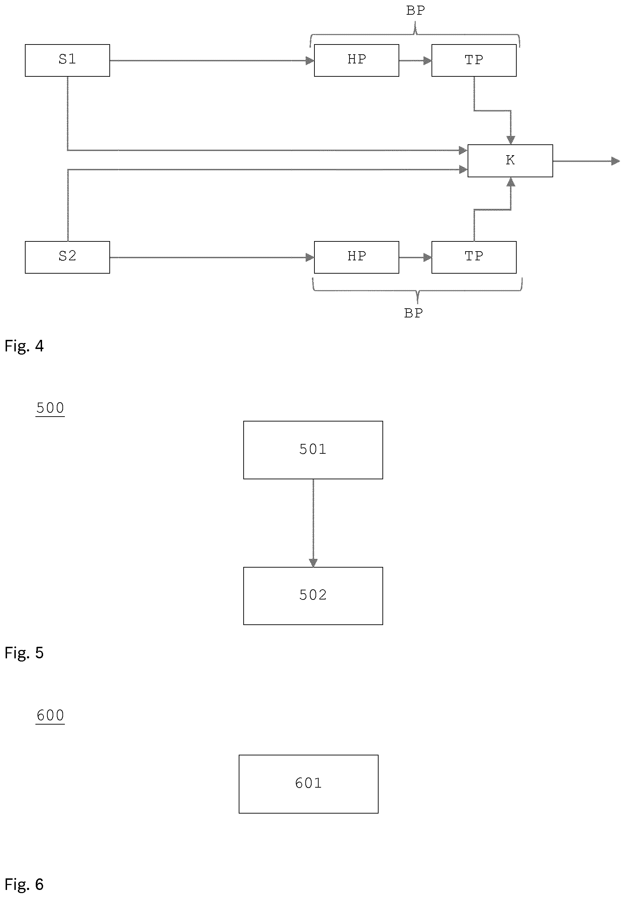

Figur 4 zeigt ein Blockschaltbild einer Ausführungsform einer Einrichtung, die eine Vorrichtung gemäß der vorliegenden Erfindung aufweist.

Darstellt in Figur 4 sind zwei Sensoren S1 und S2, deren Sensorsignale, mithin deren Messsignal, mittels eines Kalman-Filters K fusioniert werden.

Dazu geben die Sensoren S1, S2 ihre Meßsignale einerseits direkt als Eingangssignale in den Kalman-Filter K ein. Andererseits werden die Messsignale gemäß dem Verfahren 500 der vorgestellten Erfindung mittels eines Hochpassfilters HP gefiltert. Das so gefilterte Messsignal wird dann mittels eines Tiefpassfilters TP gefiltert. Das Ergebnis dieses Filterschritts geht als (gemessene) Varianz des jeweiligen Messsignals in den Kalman-Filter K als weitere Eingangsgröße ein.

Die Kombination aus Hochpass- und Tiefpassfilter wird auch als Bandpassfilter BP bezeichnet. Demnach kann alternativ zu zwei einzelnen Filtern auch ein Bandpassfilter BP eingesetzt werden.

Es versteht sich, dass die Filter HP, TP, BP unterschiedlich ausgestaltet sein können. Die Filter können hard- bzw. softwareseitig oder als Kombination daraus vorliegen.

Der Kalman-Filter K gibt als Ergebnis das fusionierte Ergebnis der beiden Messwerte bzw. der Sensorsignale aus.

Im Bereich der Fahrdynamik von Straßenfahrzeugen sind relevante Informationen im Signal bei 3 Hz bis 20 Hz, insbesondere bei 5 Hz bis 20 Hz, zu suchen.

Aus diesen Randbedingungen lässt sich für den Hochpassfilter HP ableiten, dass die Grenzfrequenz des Tiefpassfilters TP, aus dem der Hochpassfilter HP erzeugt werden kann (bspw. durch Inversion), bei etwa 5 Hz bis 10Hz liegen sollte, da durch die möglichst geringe Gruppenlaufzeit die Dämpfung selbst bis 20Hz noch nicht sehr hoch sein wird. Der Tiefpassfilter TP sollte mindestens eine Grenzfrequenz von 2 Hz aufweisen, um ebenfalls keinen zu hohen Beitrag zur Gruppenlaufzeit beizusteuern.

Für die Anwendung in Kraftfahrzeugen wird ein FIR-Hochpassfilter 16ter Ordnung mit den Koeffizienten bhp = [1, 16, 36, 55, 73, 84, 93, 102, -920, 102. 93, 84, 73, 55, 36, 16, 1] und ahp = 1024 sowie ein Infinite Impulse Response (IIR) Tiefpassfilter mit den Koeffizienten btp = [1] und atp = [16, -15] für eine Abtastrate von 200 Hz vorgeschlagen. Damit wird eine Gruppenlaufzeit im Durchlassbereich von etwa 8 bis 15 Samples erreicht. Das entspricht bei einer Abtastrate von 200 Hz einer Gruppenlaufzeit von 40 ms bis 75 ms.

Figur 5 zeigt ein Ablaufdiagramm einer Ausführungsform eines Verfahrens zur Messung der Varianz in einem Messsignal gemäß der vorliegenden Erfindung.

In Schritt 501 wird mittels eines Hochpassfilters das Messsignal gefiltert, um ein gefiltertes Messsignal zu erhalten.

In Schritt 502 wird anhand des gefilterten Messsignals die Varianz in dem Messsignal bestimmt.

Figur 6 zeigt ein Ablaufdiagramm einer Ausführungsform eines Verfahrens zur Datenfusion gemäß der vorliegenden Erfindung.

In Schritt 601 werden Eingangssignale mittels eines Kalman-Filters fusioniert, wobei zur Bestimmung der Varianz der Eingangssignale ein Verfahren zur Messung der Varianz in einem Messsignal gemäß der vorliegenden Erfindung angewendet wird.

## Patentansprüche

1. Verfahren (600) zur Datenfusion mittels eines Kalman-Filters (K), wobei ein erstes Eingangssignal des Kalman-Filters ein Messsignal ist, wobei zur Messung (500) der Varianz des Messsignals das Messsignals mittels eines linearphasigen Hochpassfilters (HP), insbesondere eines Finite Impulse Response (FIR) Filter, gefiltert wird (501), um ein gefiltertes Messsignal zu erhalten und die Varianz anhand des gefilterten Messsignals bestimmt wird (502), wobei ein zweites Eingangssignal die gemessene Varianz des Messsignals ist,
**dadurch gekennzeichnet, dass** das Messsignal mittels des Kalman-Filters (K) mit mindestens einem weiteren dritten Eingangssignal fusioniert (601) wird,
wobei die Gruppenlaufzeit des Hochpassfilters (HP) zwischen 50 ms und 100 ms, insbesondere bei im Wesentlichen 80 ms, liegt.

2. Verfahren (600) nach Anspruch 1, wobei Koeffizienten des Hochpassfilters (HP) von der Abtastrate abhängig sind, mit der das Messsignal erfasst wird.

3. Verfahren (600) nach Anspruch 1, wobei nach dem Schritt des Filterns (501) ein zweiter Schritt des Filterns erfolgt, wobei in dem zweiten Schritt des Filterns die, aus dem zuvor gefilterten Messsignal bestimmte, Varianz mittels eines Tiefpassfilters (TP) gefiltert wird.

4. Verfahren (600) nach einem der vorhergehenden Ansprüche, wobei die Grenzfrequenzen des Hochpassfilters (HP) und/oder des Tiefpassfilters (TP) zwischen 2 Hz und 20 Hz, insbesondere bei 5 Hz bis 10 Hz, liegen.

5. Verfahren (600) nach einem der vorhergehenden Ansprüche, wobei im Schritt des Bestimmens, die Varianz mittels einer laufenden Berechnung und/oder mittels eines laufenden Mittelwerts und/oder mittels eines laufenden Mittelwerts der Summenquadrate berechnet wird.

6. Verfahren (600) nach Anspruch 3, wobei im Schritt des Bestimmens (502) ein dritter Schritt des Filterns erfolgt und in diesem Schritt der laufende Mittelwert gefiltert wird.

7. Verfahren (600) nach einem der vorhergehenden Ansprüche, wobei die Varianz außerhalb des Kalman-Filters (K) gemessen (500) wird.

8. Computerprogramm, welches eingerichtet ist, alle Schritte des Verfahrens (600) nach einem der Ansprüche 1 bis 7 auszuführen.

9. Maschinenlesbares Speichermedium, auf dem das Computerprogramm nach Anspruch 8 gespeichert ist.

10. Vorrichtung, die eingerichtet ist, alle Schritte des Verfahrens (600) nach einem der Ansprüche 1 bis 7 auszuführen.

## Claims

1. Method (600) for data fusion by means of a Kalman filter (K), a first input signal of the Kalman filter being a measurement signal, wherein measurement (500) of the variance of the
measurement signal is accomplished by filtering (501) the measurement signal by means of a linear-phase high-pass filter (HP), in particular a finite impulse response (FIR) filter, in order to obtain a filtered measurement signal, and determining (502) the variance on the basis of the filtered measurement signal, a second input signal being the measured variance of the measurement signal, **characterized in that** the measurement signal is fused (601) with at least one further, third input signal by means of the Kalman filter (K),
wherein
the group delay of the high-pass filter (HP) is between 50 ms and 100 ms, in particular is substantially 80 ms.

2. Method (600) according to Claim 1, wherein coefficients of the high-pass filter (HP) are dependent on the sampling rate at which the measurement signal is detected.

3. Method (600) according to Claim 1, wherein the filtering step (501) is followed by a second filtering step, the second filtering step comprising filtering the variance determined from the previously filtered measurement signal by means of a low-pass filter (TP).

4. Method (600) according to one of the preceding claims, wherein the cut-off frequencies of the high-pass filter (HP) and/or the low-pass filter (TP) are between 2 Hz and 20 Hz, in particular are 5 Hz to 10 Hz.

5. Method (600) according to one of the preceding claims, wherein the determining step comprises calculating the variance by means of a running calculation and/or by means of a running average and/or by means of a running average of the sums of the squares.

6. Method (600) according to Claim 3, wherein the determining step (502) comprises performing a third filtering step and this step comprises filtering the running average.

7. Method (600) according to one of the preceding claims, wherein the variance is measured (500) outside the Kalman filter (K).

8. Computer program configured to carry out all the steps of the method (600) according to one of Claims 1 to 7.

9. Machine-readable storage medium on which the computer program according to Claim 8 is stored.

10. Apparatus configured to carry out all the steps of the method (600) according to one of Claims 1 to 7.

## Revendications

1. Procédé (600) de fusion de données au moyen d'un filtre Kalman (K), dans lequel un premier signal d'entrée du filtre Kalman est un signal de mesure, dans lequel pour mesurer (500) la variance du
signal de mesure, le signal de mesure est filtré (501) au moyen d'un filtre passe-haut (HP) à phase linéaire, en particulier d'un filtre à réponse impulsionnelle finie (FIR), afin d'obtenir un signal de mesure filtré, et la variance est déterminée (502) à l'aide du signal de mesure filtré, dans lequel un deuxième signal d'entrée est la variance mesurée du signal de mesure, **caractérisé en ce que** le signal de mesure est fusionné (601) au moyen du filtre Kalman (K) avec au moins un autre troisième signal d'entrée,
dans lequel
le temps de propagation de groupe du filtre passe-haut (HP) est compris entre 50 ms et 100 ms, étant en particulier substantiellement égal à 80 ms.

2. Procédé (600) selon la revendication 1, dans lequel des coefficients du filtre passe-haut (HP) dépendent du taux d'échantillonnage auquel le signal de mesure est détecté.

3. Procédé (600) selon la revendication 1, dans lequel, après l'étape de filtrage (501), une deuxième étape de filtrage est effectuée, dans lequel, à la deuxième étape de filtrage, la variance déterminée à partir du signal de mesure précédemment filtré est filtrée au moyen d'un filtre passe-bas (TP).

4. Procédé (600) selon l'une quelconque des revendications précédentes, dans lequel les fréquences du filtre passe-haut (HP) et/ou du filtre passe-bas (TP) sont comprises entre 2 Hz et 20 Hz, en particulier entre 5 Hz et 10 Hz.

5. Procédé (600) selon l'une quelconque des revendications précédentes, dans lequel, à l'étape de détermination, la variance est calculée au moyen d'un calcul continu et/ou au moyen d'une moyenne mobile et/ou au moyen d'une moyenne mobile des carrés des sommes.

6. Procédé (600) selon la revendication 3, dans lequel, à l'étape de détermination (502), une troisième étape de filtrage est effectuée, et la moyenne mobile est filtrée au cours de cette étape.

7. Procédé (600) selon l'une quelconque des revendications précédentes, dans lequel la variance est mesurée (500) à l'extérieur du filtre de Kalman (K).

8. Programme informatique qui est conçu pour exécuter toutes les étapes du procédé (600) selon l'une quelconque des revendications 1 à 7.

9. Support de stockage lisible par machine sur lequel est stocké le programme informatique selon la revendication 8.

10. Dispositif qui est conçu pour exécuter toutes les étapes du procédé (600) selon l'une quelconque des revendications 1 à 7.
